# NEUE EUROPÄISCHE PATENTSCHRIFT

(11) **EP 1 053 075 B2**
(45) Veröffentlichungstag und Bekanntmachung des Hinweises auf die Entscheidung über den Einspruch: **28.09.2005**
(45) Hinweis auf die Patenterteilung: 04.09.2002
(21) Anmeldenummer: 99934195.1
(22) Anmeldetag: 27.01.1999
(51) Int. Cl.: B24B 13/005, B24B 9/14, B24B 49/12, G05B 19/12, B24B 13/06

(54) **VERFAHREN ZUM MARKIEREN ODER BOHREN VON LÖCHERN IN BRILLENGLÄSERN UND VORRICHTUNG ZUR DURCHFÜHRUNG DES VERFAHRENS**
METHOD FRO MARKING OR DRILLING HOLES IN GLASS LENSES AND DEVICE FOR REALISING THE SAME
PROCEDE POUR MARQUER OU PERCER DES TROUS DANS DES VERRES DE LUNETTES ET DISPOSITIF PERMETTANT DE METTRE LEDIT PROCEDE EN OEUVRE

(30) Priorität: 05.02.1998 DE 19804428
(43) Veröffentlichungstag der Anmeldung: 22.11.2000
(73) Patentinhaber: Weco Optik GmbH, 40231 Düsseldorf (DE)
(72) Erfinder: Gottschald, Lutz, 40670 Meerbusch (DE)
(74) Vertreter: Rehders, Jochen
(86) Internationale Anmeldenummer: PCT/EP1999/000512
(87) Internationale Veröffentlichungsnummer: WO 1999/039871

(56) Entgegenhaltungen:
- EP-A- 0 822 031
- FR-A- 2 751 256
- US-A- 4 781 452

## Beschreibung

Die Erfindung betrifft ein Verfahren zum Markieren oder Bohren von Löchern in Brillengläsern sowie eine Vorrichtung zur Durchführung des Verfahrens.

Der Nasensteg und die Bügel einer randlosen Brille werden üblicherweise an die formgeschliffenen Brillengläser angeschraubt. Daher ist es notwendig, in den formgeschliffenen Brillengläsern lagegenau die Bohrungen zum Befestigen des Nasenstegs und der Bügel anzubringen. Die Lage dieser Bohrungen ist durch die Form der Brillengläser sowie des Nasenstegs und der Bügel bestimmt und vom Hersteller dieser Teile festgelegt. Zum Aussuchen einer solchen randlosen Brille werden die Elemente, an eine sogenannte Stützscheibe angeschraubt, geliefert und erlauben ein Anprobieren der randlosen Brille ohne Verwendung von optischen Gläsern. Häufig wird zu der randlosen Brille eine Formscheibe zum Schleifen der Kontur der Brillengläser mitgeliefert, die vom Hersteller ebenfalls mit den Bohrungen zum Befestigen der Brillengestellelemente versehen ist.

Mittels der mit den Befestigungsbohrungen versehenen Formscheibe oder Stützscheibe markiert der Optiker die Bohrungen auf einem Brillenglas und bohrt die Löcher mittels einer geeigneten Bohrvorrichtung.

Sollen die Brillengläser unter Beibehaltung der Elemente des Brillengestells ausgewechselt werden, weil sich beispielsweise die Sehschärfe des Brillenträgers verändert hat oder weil eines der Brillengläser zu Bruch gegangen ist, lässt sich ein vorhandenes, bereits mit Bohrungen versehenes Brillenglas zum Markieren der Bohrungen verwenden.

Es liegt auf der Hand, dass mit diesem Markieren der Bohrungen und dem anschließenden Bohren der Löcher ein erheblicher manueller Aufwand verbunden ist, der eine große Geschicklichkeit seitens des Optikers erfordert und daher Kosten verursacht, die sich noch dadurch erhöhen können, dass das Bohren der Löcher mittels üblicher Bohrvorrichtungen häufig zu einem Bruch des Brillenglases führt, das dann nicht mehr verwendbar ist.

Aus der JP-A-08155945 ergibt sich eine komplexe numerisch gesteuerte Brillenglasbearbeitungsmaschine mit einer drehbaren Brillenglashaltewelle, einer relativ dazu beweglichen Schleifscheibe zur Umfangsbearbeitung eines Brillenglases und einer davon unabhängig linear und winkelmäßig bezüglich eines in der Brillenglashaltewelle eingespannten Brillenglases einstellbaren Bohrvorrichtung mit einem axial verstellbaren Bohrer. Des Weiteren umfasst die Brillenglasbearbeitungsmaschine eine Winkelmessvorrichtung, die den Neigungswinkel einer optischen Oberfläche eines Brillenglases misst, eine Messvorrichtung zum Messen der Form eines Brillenglases oder der Brillenglasöffnung in einer Brillenfassung, die einen Sensor zum Erfassen der Koordinaten von Befestigungslöchern in einem Demonstrationsglas für eine randlose Brille umfasst. Zum Vermessen von Brillengläsern, Formscheiben und Demonstrationsgläsern wird ein Glashalter benötigt, der mit Aufnahmen zum lagegenauen Halten von an Brillengläsern angebrachten Blöcken oder Saugern oder an Formscheiben angebrachten Formscheibenhaltern versehen ist.
Das Ausrichten entsprechend den Koordinaten der Befestigungslöcher erfolgt durch Höhenverstellung und Drehen des in der Brillenglashaltewelle eingespannten Brillenglases sowie durch lineares Bewegen der Bohrvorrichtung senkrecht zur Achse der Brillenglashaltewelle und durch Drehen der Bohrvorrichtung um eine Achse senkrecht zu Linearverschiebung der Bohrvorrichtung. Zusätzlich ist für das Bohren noch eine Axialverschiebung entlang der Drehachse des Bohrers erforderlich.

Der Erfindung liegt das Problem zu Grunde, das Markieren oder Bohren Löchern in Brillengläsern zu vereinfachen und zu beschleunigen, die Genauigkeit zu erhöhen und die Gefahr des Glasbruchs beim Bohren zu vermindern.

Ausgehend von dieser Problemstellung werden Verfahren zum Markieren oder Bohren von Löchern in Brillengläsern mit den Merkmalen der Ansprüche 1 und 2 vorgeschlagen. Des Weiteren wird eine Brillenglasrandschleifmaschine mit einer Markier- bzw. Bohrvorrichtung zum Markieren oder Bohren von Löchern in Brillengläsern mit den Merkmalen des Anspruchs 3 vorgeschlagen. Ausgestaltungen der Vorrichtung gemäß Anspruch 3 ergeben sich aus den Unteransprüchen 4 bis 9.

Die Erfindung geht von der Überlegung aus, dass der Aufwand zum Aufnehmen der Daten der Lage der Bohrungen gering ist, da für jede Bohrung nur eine Wertepaar (x, y), (r,ϕ) benötigt wird und diese Wertepaare genau und schnell das Steuern des Markierens oder des Bohrens mittels einer CNC-gesteuerten Markier- bzw. Bohrvorrichtung bewirken können.

Das Markieren der Löcher kann mittels eines Tintenstrahls oder eines Senkers erfolgen. In diesem Fall wird das eigentliche Bohren der Löcher in einer üblichen Bohrvorrichtung durchgeführt.

Vorzugsweise werden die Löcher mittel einer CNC-gesteuerten Bohrvorrichtung gebohrt, wobei das Bohrwerkzeug dem Brillenglasmaterial anzupassen ist. Handelt es sich beispielsweise um Silikatgläser, wird vorzugsweise ein Diamantbohrwerkzeug verwendet, während zum Bohren von Kunststoffgläsern Bohrwerkzeuge aus Hartmetall geeignet sind.

Mittels einer Zentriervorrichtung mit einem Videosystem und einer Bildschirmdarstellung der Kontur des Brillenglases oder der Formscheibe oder der Stützscheibe und der Bohrungen lässt sich das Abtasten der Lage der Bohrungen durchführen, wenn dieses Videosystem so eingerichtet ist, dass das Aufnehmen der Daten der Lage der Bohrungen mittels einer automatischen Bildauswertung erfolgt.

Bei einem Videosystem ohne automatische Bildauswertung lassen sich die Daten der Lage der Bohrungen aufnehmen, indem die auf dem Bildschirm sichtbaren Bohrungen mittels eines durch eine Tastatur oder einer Rechnermaus beweglichen Cursors markiert und durch Anklicken der jeweiligen Bohrung registriert werden.

Eine weitere Möglichkeit, die Lage der Bohrungen abzutasten, besteht darin, hierfür eine Brillenglasrandschleifmaschine zu verwenden, in der auch das Markieren oder Bohren der Löcher erfolgt. Hierbei ist vorteilhaft, dass sich zum Aufnehmen der Daten und zum Steuern des Markierens oder Bohrens sowie zum Steuern des Formschleifens des Brillenglases derselbe Rechner verwenden lässt.

Dadurch, dass die Markier- oder Bohrvorrichtung an der Brillenglasrandschleifmaschine angeordnet ist, lässt sie sich durch denselben Rechner steuern, der auch zum Steuern des Formschleifens von Brillengläsern eingesetzt wird.

Die Markier- oder Bohrvorrichtung kann in X-Richtung teleskopierbar entweder in einer Nische der Schleifkammer oder außerhalb der Schleifkammer angeordnet sein, wobei im ersten Fall das zu markierende oder zu bohrende Brillenglas an der Stelle in der Brillenglashaltewelle gehalten ist, an der auch das Formschleifen durchgeführt wird, während im zweiten Fall eine Halterung für ein zu markierendes oder bohrendes Brillenglas außerhalb der Schleifkammer an der Brillenglashaltewelle vorzusehen ist.

Da die Markier- oder Bohrvorrichtung mit der Schleifscheibe in X- und Z-Richtung bewegungsgekoppelt ist, kann das Positionieren der Markier- oder Bohrvorrichtung bezüglich des von der Brillenglashaltewelle gehaltenen Brillenglases durch den Rechner gesteuert in Abhängigkeit von den eingegebenen Koordinaten der Löcher erfolgen, wobei hierfür dieselbe Bewegungssteuerung Verwendung findet, die auch zum Formschleifen des Brillenglases dient.

Besonders einfach lässt sich die Lage der Löcher in Brillengläsern als Datensatz in den Rechner eingeben. Dieses Eingeben des Datensatzes lässt sich in Form von rechtwinkligen oder Polarkoordinaten mittels einer mit dem Rechner verbundenen Tastatur oder durch Einlesen des Datensatzes, der auf einer Diskette, einem EPROM oder einem Magnetstreifen gespeichert ist oder mittels eines Barcodes dargestellt ist, bewerkstelligen. Diese gespeicherten Datensätze können vom Hersteller des Brillengestells geliefert werden und auch einen Datensatz zum Schleifen der Umfangskontur des Brillenglases umfassen. Ebenso lassen sich diese Datensätze durch Abtasten eines Brillenglases, einer Formscheibe oder einer Stützscheibe aufnehmen.

Vorteilhafterweise kann auch die Abtastvorrichtung für die Lage der Bohrungen in einem Brillenglas oder einer Formscheibe oder einer Stützscheibe an der Brillenglasrandschleifmaschine angeordnet sein und kann mit der Schleifscheibe in X- und Z-Richtung bewegungsgekoppelt sein. Hierbei kann ein Tastarm radial in den Bereich des von der Brillenglashaltewelle gehaltenen Brillenglases, der Formscheibe oder Stützscheibe ragen, wobei an dem Tastarm ein berührend oder berührungslos wirkendes Tastelement angeordnet ist.

Wenn das Tastelement als Taststift ausgebildet ist, lässt sich dieser Taststift in X- und Z-Richtung an die jeweilige Bohrung im Brillenglas oder der Formscheibe oder Stützscheibe heranführen, die durch Drehen der Brillenglashaltewelle in den Bereich des Tastelements gebracht wird. Dabei werden die Koordinaten des Lochs registriert und dem Rechner zugleitet.

Das Tastelement kann auch als opto-elektronische Tasteinrichtung ausgebildet sein, die in der Lage ist, die Koordinaten eines Lochs in einem von der Brillenglashaltewelle gehaltenen Brillenglas einer Formscheibe oder einer Stützscheibe zu registrieren.

Vorzugsweise kann eine lineare, opto-elektronische Tasteinrichtung, beispielsweise ein ladungsgekoppelter (CCD), linearer Bildabtaster am Tastarm angeordnet sein, der während einer Umdrehung der Brillenglashaltewelle sowohl die Lage der Bohrungen als auch die Umfangskontur eines Brillenglases, einer Formscheibe oder einer Stützscheibe erfasst und dem Rechner Daten zum Steuern des Formschleifens und des Markierens und Bohrens der Löcher zuleitet.

Die Abtastvorrichtung kann sowohl innerhalb als auch außerhalb der Schleifkammer angeordnet sein und gleichzeitig als Markier- oder Bohrvorrichtung dienen, wenn beispielsweise der Taststift gleichzeitig das Bohrwerkzeug ist oder wenn die opto-elektronische Tasteinrichtung als Lasereinrichtung ausgebildet ist, die sich durch Steuern der Intensität des Laserstrahls sowohl als Abtastvorrichtung als auch als Markier- oder Bohrvorrichtung verwenden lässt.

Wenn das Tastelement als Taststift ausgebildet ist, läßt sich dieser Taststift in X- und Z-Richtung an die jeweilige Bohrung im Brillenglas oder der Formscheibe oder Stützscheibe heranführen, die durch Drehen der Brillenglashaltewelle in den Bereich des Tastelements gebracht wird. Dabei werden die Koordinaten des Lochs registriert und dem Rechner zugeleitet.

Das Tastelement kann auch als opto-elektronische Tasteinrichtung ausgebildet sein, die in der Lage ist, die Koordinaten eines Lochs in einem von der Brillenglashaltewelle gehaltenen Brillenglas, einer Formscheibe oder einer Stützscheibe zu registrieren.

Vorzugsweise kann eine lineare, opto-elektronische Tasteinrichtung, beispielsweise ein ladungsgekoppelter (CCD), linearer Bildabtaster am Tastarm angeordnet sein, der während einer Umdrehung der Brillenglashaltewelle sowohl die Lage der Bohrungen als auch die Umfangskontur eines Brillenglases, einer Formscheibe oder einer Stützscheibe erfaßt und dem Rechner zum Steuern des Formschleifens und des Markierens und Bohrens der Löcher zuleitet.

Die Abtastvorrichtung kann sowohl innerhalb als auch außerhalb der Schleifkammer angeordnet sein und gleichzeitig als Markier- oder Bohrvorrichtung dienen, wenn beispielsweise der Taststift gleichzeitig das Bohrwerkzeug ist oder wenn die opto-elektronische Tasteinrichtung als Lasereinrichtung ausgebildet ist, die sich durch Steuern der Intensität des Laserstrahls sowohl als Abtastvorrichtung als auch als Markier- oder Bohrvorrichtung verwenden läßt. [0028] Die Erfindung wird nachstehend anhand mehrerer, in der Zeichnung dargestellter Ausführungsbeispiele des näheren erläutert. In der Zeichnung zeigen:
- Fig. 1: eine schematische Vorderansicht einer Brillenglasrandschleifscheibe mit einer Vorrichtung zum Abtasten der Lage von Bohrungen in einer Formscheibe, außerhalb der Schleifkammer,
- Fig. 2: einen Querschnitt durch eine Brillenglasrandschleifmaschine mit einer Vorrichtung zum Abtasten und/oder einer Vorrichtung zum Markieren oder Bohren von Löchern in Brillengläsern und
- Fig. 3: eine zum Abtasten der Lage der Bohrungen in Brillengläsern, Formscheiben oder Stützscheiben eingerichtete Zentriervorrichtung.

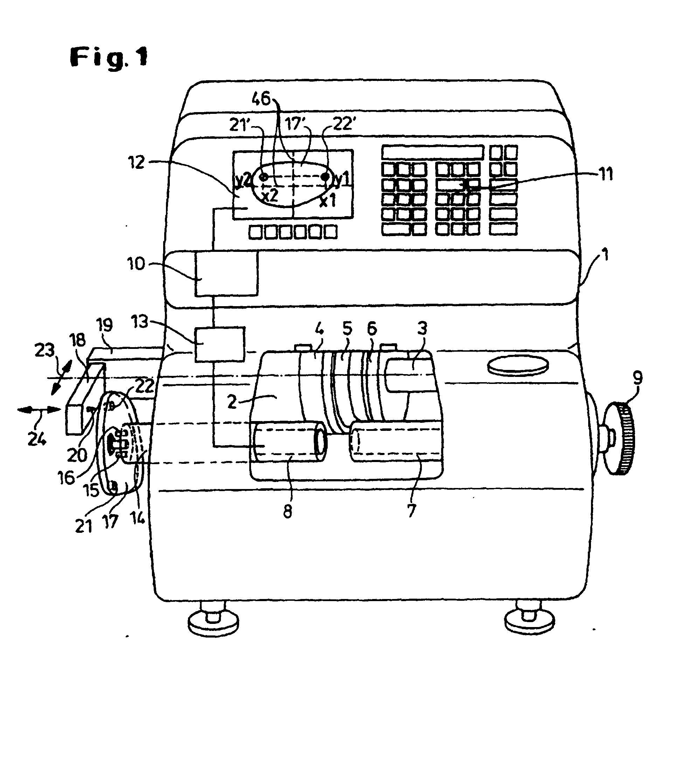

Die in Fig. 1 dargestellte Brillenglasrandschleifmaschine weist ein Gehäuse 1 mit einer Schleifkammer 2 auf, in der eine auf einer Welle 3 angeordnete Vorschleifscheibe 4 mit zylindrischen Umfang und zwei Facettenschleifscheiben 5, 6 mit unterschiedlichen Facettennuten angeordnet sind. Parallelachsig zur Welle 3 mit den Schleifscheiben 4, 5, 6 ist eine Brillenglashaltewelle aus zwei Halbwellen 7, 8 angeordnet, von denen sich die Halbwelle 7 mittels einer Handhabe 9 axial verschieben läßt, um ein nicht dargestelltes Rohglas einzuklemmen. Die Schleifkammer 2 ist während des Schleifvorgangs mittels eines nicht dargestellten Dekkels verschlossen.

Zum Schleifen wird die Welle 3 mit den Schleifscheiben 4, 5, 6 in eine schnelle Drehung versetzt, während sich ein von der Brillenglashaltewelle 7, 8 gehaltenes Rohglas langsam dreht. Der Abstand der Brillenglashaltewelle 7, 8 von der Welle 3 mit den Schleifscheiben 4, 5, 6 wird durch einen Rechner 10 gesteuert, in dem Steuerdaten zum Schleifen des Rohglases entsprechend der Form eines ausgewählten Brillengestells gespeichert sind.

Am Gehäuse 1 sind noch eine Eingabetastatur 11 und ein Bildschirm 12 angeordnet. Mittels der Eingabetastatur 11 lassen sich in bekannter Weise gespeicherte Brillenglaskonturen aufrufen und zur Brillenglasbearbeitung an die Steuerung der Brillenglasrandschleifmaschine leiten.

Des weiteren ist es möglich, mittels der Eingabetastatur 11 persönliche Daten des Brillenträgers einzugeben, z. B. den Pupillenabstand, die Achsenlage eines zylindrischen oder prismatischen Schliffs des Brillenglases oder die Lage eines Nahteils.

Ein Bildschirm 12 dient dazu, die eingebenen Daten anzuzeigen. Des weiteren lassen sich auf dem Bildschirm 12 das kreisförmige Rohglas und/oder ein entsprechend den eingegebenen Daten formzuschleifendes Brillenglas darstellen.

Seitlich am Gehäuse 1 ist ein Ende 14 der Halbwelle 8 herausgeführt. An diesem Ende 14 ist eine Aufnahme in Form von Stiften 15, 16 mit unterschiedlichen Durchmessern für eine Formscheibe 17 angeordnet. Die Formscheibe weist entsprechende Löcher mit entsprechendem Durchmesser auf, so daß sie sich nur in einer bestimmten Winkelstellung an das herausgeführte Ende 14 der Halbwelle 8 ansetzen läßt.

An einem aus dem Gehäuse 1 herausgeführten Halter 19 ist ein teleskopierbarer Tastarm 18 angeordnet, an dessen freien Ende im Bereich der Formscheibe 17 ein Tastelement 20, das hier als Taststift dargestellt ist, angeordnet ist. Der Tastarm 18 läßt sich in Richtung des Pfeils 23 bewegen, während der Halter 19 in Richtung des Pfeils 24 bewegbar ist.

Durch Drehen der Brillenglashaltewelle 7, 8 werden eine Bohrung 21 bzw. eine Bohrung 22 so verstellt, daß sich der Taststift 20 durch Verschieben des Tastarms 18 in Richtung des Pfeils 23 und Verschieben des Halters 19 in Richtung des Pfeils 24 in die Bohrung 21 bzw. 22 einsetzen läßt. Der zugehörige Winkel ϕ der Brillenglashaltewelle 7, 8 wird durch einen Winkelgeber 13 registriert, während der Abstand r der Bohrung 21 bzw. 22 von der Achse der Brillenglashaltewelle 7, 8 durch einen nicht dargestellten, mit dem Tastarm 18 in Verbindung stehenden Weggeber aufgenommen wird. Die registrierten Koordinaten der Bohrungen 21 bzw. 22 gelangen in den Rechner 10 und werden auf dem Bildschirm 12 im Bild 17' der Formscheibe 17 als Bilder der Bohrungen 21' bzw. 22' dargestellt. Da der Bildschirm 12 mit einem rechtwinkligen Achsenkreuz 46 versehen ist, lassen sich die Koordinaten X¹' Y₁ der Bohrung 22' und die Koordinaten X₂, Y₂ der Bohrung 21' auf dem Bildschirm 12 ablesen und zum Markieren und/oder Bohren von entsprechenden Löchern in einem zwischen den Halbwellen 7, 8 gehaltenen Brillenglas verwenden, wenn die Brillenglasrandschleifmaschine eine entsprechende Markier- oder Bohrvorrichtung aufweist.

Die Koordinaten X₁, Y₁ und X₂, Y₂ für die Bohrungen 22', 21' lassen sich auch dazu verwenden, eine von der Brillenglasrandschleifmaschine getrennte Markier- oder Bohrvorrichtung anzusteuern bzw. in eine solche Markier- oder Bohrvorrichtung die Koordinaten mittels einer Tastatur oder auf andere geeignete Weise wie z. B. mittels einer Diskette, eines EPROMs, eines Barcodes oder eines Magnetstreifens einzugeben.

Der Halter 19 kann auch mit der Bewegungssteuerung der Schleifscheiben 4, 5, 6 bezüglich der Brillenglashaltewelle 7, 8 in X- und Z-Richtung bewegungsgekoppelt sein, so daß die Bewegungen des Halters 19 über entsprechende Wegaufnehmer an der Bewegungssteuerung für die Schleifscheibe 4, 5, 6 das Registrieren der Koordinaten der Löcher 21, 22 bewirken. In diesem Fall kann der Tastarm 18 fest am Halter 19 angeordnet sein, kann jedoch auch teleskopierbar aus einer Ruhestellung in eine Arbeitsstellung beweglich sein.

Die teleskopierbare Anordnung des Tastarms in Verbindung mit einer Bewegungskopplung an die Schleifscheiben 4, 5, 6 ist besonders vorteilhaft, wenn die Tastvorrichtung 18,19,20 in nicht dargestellter Weise in der Schleifkammer 2 angeordnet ist und sich der Tastarm 18 in der Ruhestellung in einer Nische der Schleifkammer 2 befindet.

Anstelle einer Formscheibe 17 läßt sich an dem herausgeführten Ende 14 der Halbwelle 8 auch ein Befestigungslöcher aufweisendes Brillenglas oder eine Stützscheibe befestigen, um die Lage der Löcher aufzunehmen.

Anstelle eines Taststifts 20 kann am Tastarm 18 ein opto-elektronisches Tastelement angeordnet sein, um die Lage der Löcher 21, 22 zu registrieren.

Wenn dieses opto-elektronische Tastelement als ladungsgekoppelter (CCD), linearer Bildabtaster ausgebildet wird, läßt sich damit sowohl die Umfangskontur einer Formscheibe 17 eines formgeschliffenen Brillenglases oder einer Stützscheibe als auch die Lage der Bohrungen ermitteln und zum Steuern des Formschleifens und des Markierens oder Bohrens der Löcher verwenden.

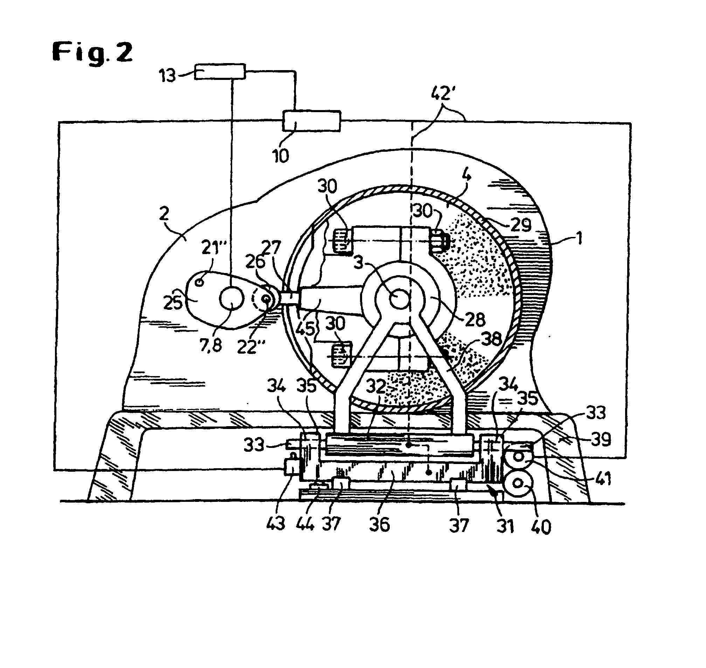

Bei der in Fig. 2 dargestellten Brillenglasrandschleifmaschine ist ein bereits formgeschliffenes Brillenglas 25, von der Brillenglashaltewelle 7, 8 gehalten, dargestellt.

An einem Lagerhals 28 einer Lagerstütze 38 für die Welle 3 der Schleifscheiben 4, 5, 6 ist eine Führung 45 für einen Teleskoparm 27 angeordnet, der einen hochtourigen Bohrerantrieb 26 trägt. Als Bohrantrieb sind Luftturbinen, kombinierte Luft-Wasserturbinen oder Hochfrequenz-Elektromotoren geeignet.

An dem Lagerhals 28 ist des weiteren ein Spritzschutz 29, der die Schleifscheiben 4, 5, 6 umfaßt, mittels Befestigungsschrauben 30 befestigt. Die Lagerstütze 38 steht mit einem Schlittenteil 32 eines Kreuzschlittens 31 in Verbindung. Das Schlittenteil 32 ist mittels Führungsstangen 33 in Bohrungen 34 in Ansätzen 35 eines zweiten Schlittenteils 36 geführt. Rechtwinklig zu den Führungsstangen 33 des Schlittenteils 32 verlaufen Führungsschienen 37, so daß sich der Kreuzschlitten 31 in X-Richtung, d. h. in Richtung der Führungsstangen 33 und in Z-Richtung, d. h. in Richtung der Führungsschienen 37, rechnergesteuert verschieben läßt. Ein Antriebsmotor 40 der über eine elektromagnetische Kupplung 41 auf das Schlittenteil 32 wirkt, ist dargestellt und ein Weggeber 43 dient zur Überwachung der Wegsteuerung in X-Richtung. Ein entsprechender Weggeber 44 dient zur Überwachung der Wegsteuerung in Z-Richtung. Sowohl die Antriebe in X-Richtung und Z-Richtung als auch die entsprechenden Weggeber 43, 44 sind über Steuerleitungen 42 mit dem Rechner 10 verbunden.

Der Kreuzschlitten 31 mit den Antrieben und Weggebern 43, 44 ist in einem Maschinenuntergestell 39 angeordnet, das auch das Gehäuse 1 trägt.

Das Formschleifen des Brillenglases 25 erfolgt rechnergesteuert mittels des Rechners 10 unter Verwendung eines in den Rechner eingegebenen, der Form des Brillenglases entsprechenden Datensatzes.

Vor dem Formschleifen oder nach dem Formschleifen lassen sich die Bohrungen 21", 22" im Brillenglas 25 anbringen, indem der hochtourige Bohrerantrieb 26 am Teleskoparm 27 aus einer nicht dargestellten Ruhestellung, in der er sich in einer Nische der Schleifkammer 2 befindet, in die in Fig. 2 dargestellte Arbeitsstellung vorgefahren wird.

Im dargestellten Ausführungsbeispiel ist der Bohrerantrieb am Teleskoparm 27 mit der Führung 45 an die Bewegung des Kreuzschlittens 31 gekoppelt. Daher werden die X-Koordinaten der Löcher 21", 22" durch Verfahren des Schlittenteils 32 entsprechend den eingegebenen Koordinaten eingestellt. Gleichzeitig wird die Brillenglashaltewelle 7, 8 entsprechend der Lage der Bohrung 21" bzw. 22" so gedreht, daß die Bohrung auf der senkrechten Verbindungslinie der Achsen der Schleifscheibenwelle 3 und der Brillenglashaltewelle 7, 8 liegt, wonach das Schlittenteil 36 in Z-Richtung bewegt und der Bohrerantrieb 26 in Betrieb gesetzt wird. Ein Bohrwerkzeug am Bohrerantrieb 26 bohrt nunmehr die Löcher 21", 22", indem das Schlittenteil 36 mit einer entsprechenden Vorschubbewegung beaufschlagt wird.

Wenn der Teleskoparm 27 in einer Führung 45 angeordnet ist, die mit dem Kreuzschlitten 31 nicht bewegungsgekoppelt ist, sondern an einer geeigneten Stelle des Maschinengestells 39 befestigt ist, läßt sich das Einstellen des Bohrerantriebs 26 auf die X-Koordinate 21", 22" durch Steuerung der Bewegung des Teleskoparms 27 mittels des Rechners 10 bewirken, ohne daß dazu eine Bewegung des Kreuzschlittens 31 erforderlich ist. In diesem Fall muß eine Möglichkeit für eine axiale Vorschubbewegung des Bohrwerkzeugs am Bohrerantrieb 26 gegen das Brillenglas 25 oder umgekehrt eine Axialbewegung des Brillenglases 25 gegen das Bohrwerkzeug am Bohrerantrieb 26 vorgesehen sein.

Anstelle eines Bohrwerkzeugs mit einem hochtourigen Bohrantrieb 26 läßt sich auch eine Laserbohrvorrichtung verwenden. Des weiteren ist es möglich, die Bohrvorrichtung 26, 27 als Abtastvorrichtung für die Lage der Bohrungen 21, 22 in einer Formscheibe verwenden, wenn diese Formscheibe in der Schleifkammer 2 zwischen die Halbwellen 7, 8 geklemmt und das Bohrwerkzeug als Taststift zum Einführen in die Löcher 21, 22 in einer Formscheibe 17 benutzt wird oder wenn im Fall einer Laserbohrvorrichtung der Laserstrahl zum Ermitteln der Lage der Löcher verwendet wird.

Ebenso kann ein Brillenglas oder eine Stützscheibe zwischen die Halbwellen 7, 8 eingeklemmt werden, um die entsprechenden Bohrungen abzutasten.

Des weiteren ist es auch möglich, die mit Bezug auf Fig. 1 beschriebene Abtastvorrichtung 18, 19, 20 zusätzlich zu der Bohrvorrichtung 26, 27 in der Schleifkammer 2 der Brillenglasrandschleifmaschine anzuordnen, wenn das Abtasten der Löcher und das Bohren mittels getrennter Vorrichtungen erfolgen soll.

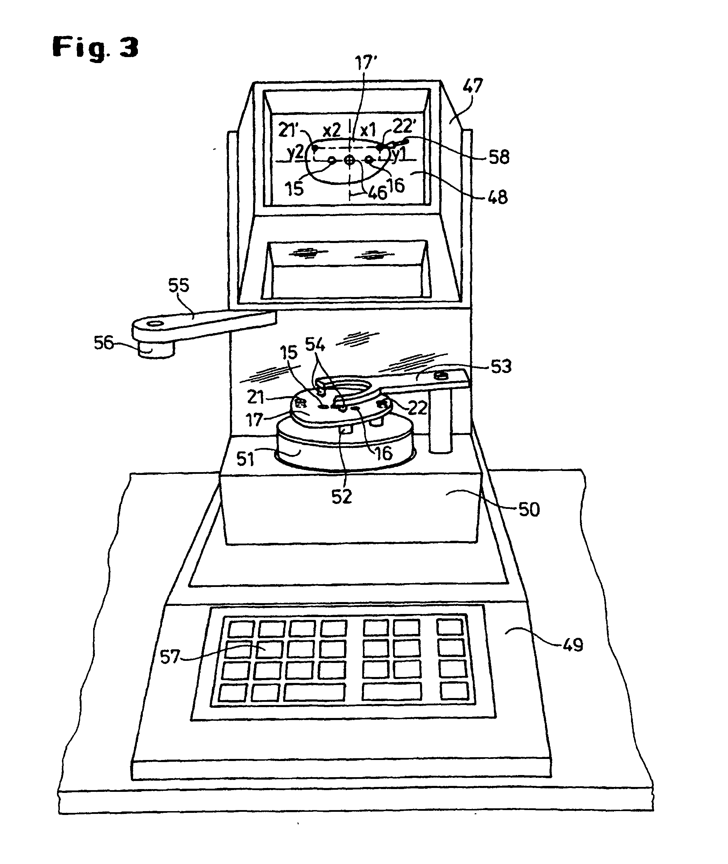

In Fig. 3 ist ein Zentriergerät dargestellt, das in einem Gehäuse 47 eine Betrachtungsoptik 48 aufweist, die aus einem rein optischen System oder einem Bildschirm bestehen kann. Mittels einer elektronischen Steuereinheit 49, die aus ergonomischen Gründen in einem Gehäuseunterteil 50 angeordnet ist und eine Eingabetastatur 57 aufweist, läßt sich in der Betrachtungsoptik 48 ein Bild 17' einer Formscheibe 17 darstellen. Diese Formscheibe 17 mit den Bohrungen 21, 22 ist auf Auflagerstifte 52 eines Trägers 51 aufgelegt und wird dort mittels Stiften 54 an einem Niederhalter 53 gehalten. Die Formscheibe 17 läßt sich auf den Auflagerstiften 52 so ausrichten, daß die Löcher für die Stifte 15, 16 dargestellt mit Bezug auf das Achsenkreuz 46 zu liegen kommen und die Bohrungen 21, 22 als Bilder 21', 22' in der Betrachtungsoptik 48 lagegenau bezüglich des Achsenkreuzes 46 erscheinen. Mittels der Tastatur 57 läßt sich nun ein Cursor 58 zu den Bildern 21', 22' der Bohrungen bewegen und die Lage bzw. die Koordinaten durch Anklicken registrieren.

Dieser Cursor 58 kann selbstverständlich auch mittels einer Rechnermaus bewegt werden und das Registieren der Koordinaten der Bohrungen 21, 22 durch Anklicken bewirken.

Die Koordinaten X₁, Y₁; X₂, Y₂ lassen sich auch in der Betrachtungsoptik 48 ablesen und notieren oder auf geeigneten Datenträgern registrieren.

Die Zentriervorrichtung gemäß Fig. 3 kann mit der Brillenglasrandschleifmaschine gemäß Fig. 2 in Datenaustauscheverbindung stehen, so daß die sich in der Zentriervorrichtung gemäß Fig. 3 ermittelten Koordinaten der Bohrungen 21, 22 zum Rechner 10 der Brillenglasrandschleifmaschine übertragen und dort zur Steuerung des Bohrens der Löchern 21", 22" verwenden lassen.

Die Zentriervorrichtung gemäß Fig. 3 wird des weiteren dazu verwendet, ein Rohglas in analoger Weise auszurichten, wie dies mit Bezug auf die Formscheibe 17 beschrieben wurde, wonach ein Schwenkarm 55 mit einem daran befestigten Halteteil 56 in Form eines Blocks oder Saugers auf das Rohglas abgesenkt und das Halteteil 56 mit dem Rohglas verbunden wird, so daß sich das Rohglas anschließend lagegenau zwischen den Halbwellen 7, 8 der Brillenglasrandschleifmaschine gemäß Fig. 1 oder Fig. 2 einsetzen und Formschleifen läßt. Eine solche Zentriervorrichtung ist in DE 42 33 400 C1 derselben Anmelderin beschrieben.

Das Bohren der Löcher kann dann in der beschriebenen Weise innerhalb oder außerhalb einer Brillenglasrandschleifmaschine durchgeführt werden.

## Patentansprüche

1. Verfahren zum Markieren oder Bohren von Löchern in Brillengläsern, bei dem
- das Abtasten der Lage von Bohrungen in einem Brillenglas oder in einer Formscheibe oder in einer Stützscheibe berührungslos in einer Zentriervorrichtung für Brillenglasrohlinge mittels eines Videosystems mit Bildschirmdarstellung der Kontur und der Bohrungen und das Aufnehmen der Daten der Lage der Bohrungen mittels einer automatischen Bildauswertung erfolgen,
- die aufgenommenen Daten der Lage der Bohrungen als rechtwinklige oder Polarkoordinaten einem Rechner zugeleitet und
- zum Steuern des Markierens oder Bohrens mittels einer CNC-gesteuerten Markier- bzw. Bohrvorrichtung verwendet werden.

2. Verfahren zum Markieren oder Bohren von Löchern in Brillengläsern, bei dem
- das Abtasten der Lage von Bohrungen in einem Brillenglas oder in einer Formscheibe oder in einer Stützscheibe berührungslos in einer Zentriervorrichtung für Brillenglasrohlinge mittels eines Videosystems mit Bildschirmdarstellung der Kontur und der Bohrungen und das Aufnehmen der Daten der Lage der Bohrungen durch Markieren mittels eines Cursors und Anklicken der jeweiligen Bohrung erfolgen,
- die aufgenommenen Daten der Lage der Bohrungen als rechtwinklige oder Polarkoordinaten einem Rechner zugeleitet und
- zum Steuern des Markierens oder Bohrens mittels einer CNC-gesteuerten Markier- bzw. Bohrvorrichtung verwendet werden.

3. Brillenglasrandschleifmaschine mit einer Markier- bzw. Bohrvorrichtung (18, 19, 20, 26, 28) zum Markieren oder Bohren von Löchern in Brillengläsern, wobei die Brillenglasrandschleifmaschine
- einen Rechner (10) zum Steuern des Formschleifens von Brillengläsern (25),
- eine winkelkodierbar drehbare und feststellbare Brillenglashaltewelle (7, 8),
- einen Winkelgeber (13) zum Aufnehmen der Drehwinkel (ϕₙ) der Brillenglashaltewelle,
- wenigstens eine bezüglich der Brillenglashaltewelle (7, 8) radial und axial verstellbare Schleifscheibe (4, 5, 6) in einer Schleifkammer (2),
- einen Weggeber zum Aufnehmen des radialen Abstandes (Xₙ) der Brillenglashaltewelle (7, 8) von der Schleifscheibe (4, 5, 6),
- einen Weggeber zum Aufnehmen der axialen Lage (Zₙ) der Brillenglashaltewelle (7,8) mit Bezug auf die Schleifscheibe (4, 5, 6),
- eine Eingabeeinrichtung (11, 18, 19, 20, 26, 27) für die Koordinaten (X₁, Y₁; X₂, Y₂) bzw. (rₙ,ϕₙ) der Löcher (21", 22") in den Rechner (10) umfasst und an der Brillenglasrandschleifmaschine
- eine durch den Rechner (10) entsprechend den eingegebenen Koordinaten gesteuerte Positioniervorrichtung (4, 5, 6, 7, 8, 18, 19, 27, 45) für die Markier- bzw. Bohrvorrichtung (18, 19, 20, 26, 27) mit Bezug auf das Brillenglas angeordnet ist,
- die mit der Schleifscheibe (4, 5, 6) in X- und Z-Richtung bewegungsgekoppelt ist, wobei das Positionieren der Markier bzw. Bohrvorrichtung (18, 19, 20; 26 27) bezüglich des von der Brillenglashaltewelle (7,8) gehaltenen Brillenglases (25) durch den Rechner (10) in Abhängigkeit von den eingegebenen Koordinaten (X₁, Y₁; X₂, Y₂) bzw. (rₙ, ϕₙ) der Löcher (21", 22") durch Verdrehen der Brillenglashaltewelle (7, 8) und Verstellen der Schleifscheibe (4, 5, 6) erfolgt.

4. Markier- oder Bohrvorrichtung, nach Anspruch 3, bei der der Arm (27) in X-Richtung teleskopierbar in einer Nische der Schleifkammer (2) angeordnet ist.

5. Markier- oder Bohrvorrichtung nach Anspruch 3 oder 4, mit einer innerhalb oder außerhalb der Schleifkammer (2) angeordneten Abtastvorrichtung (18, 19, 20; 26, 27) für die Lage der Bohrungen (21, 22; 21", 22") in einem Brillenglas (25) oder einer Formscheibe (17) oder einer Stützscheibe an der Brillenglasrandschleifmaschine, die mit der Brillenglashaltewelle (7,8) oder der Schleifscheibe (4,5,6) in X- und Z-Richtung bewegungsgekoppelt ist.

6. Markier- oder Bohrvorrichtung nach Anspruch 5, bei der ein Tastarm (18; 27) radial in den Bereich des von der Brillenglashaltewelle (7, 8) gehaltene Brillenglases (25), der Formscheibe (17) oder der Stützscheibe ragt und an dem Tastarm (18; 27) ein berührend oder berührungslos wirkendes Tastelement (20) angeordnet ist.

7. Markier- oder Bohrvorrichtung nach Anspruch 6, bei der das Tastelement (20) als Taststift ausgebildet ist.

8. Markier- oder Bohrvorrichtung nach Anspruch 6, bei der das Tastelement (20) als opto-elektronische Tasteinrichtung ausgebildet ist.

9. Markier- oder Bohrvorrichtung nach Anspruch 8, bei der am Tastarm (18) eine lineare opto-elektronische Tasteinrichtung angeordnet ist.

## Claims

1. Method of marking or drilling holes in spectacle lenses, wherein
- the position of holes in a spectacle lens or a former or a supporting disc is scanned without contact in a centering device for spectacle lens blanks by means of a video system with a screen display of the contour and the holes and the data concerning the position of the holes are detected by automatic image evaluation,
- the detected data about the position of the holes are fed to a computer as rectangular or polar coordinates and
- are used to control the marking or drilling by means of a CNC controlled marking or drilling device.

2. Method of marking or drilling holes in spectacle lenses, wherein
- the position of holes in a spectacle lens or a former or a supporting disc is scanned without contact in a centering device for spectacle lens blanks by means of a video system with a screen display of the contour and the holes and detecting of the data concerning the position of the holes by marking by means of a cursor and clicking on the respective hole,
- the detected data about the position of the holes are fed to a computer as rectangular or polar coordinates and
- are used to control the marking or drilling by means of a CNC controlled marking or drilling device.

3. Spectacle lens rim grinding machine comprising a marking and drilling device (18, 19, 20, 26, 28) for marking or drilling holes in spectacle lenses, wherein the spectacle lens rim grinding machine comprises
- a computer (10) for controlling the grinding in shape of spectacle lenses (25),
- a spectacle lens holding shaft (7, 8) which may be rotated and fixed for angle encoding,
- an angle transmitter (13) for detecting the rotational angle (ϕₙ) of the spectacle lens holding shaft,
- at least one grinding wheel (4, 5, 6) in a grinding chamber (2) which is radially and axially adjustable relative to the spectacle lens holding shaft (6, 7),
- a position encoder for detecting the radial distance (Xₙ) between the spectacle lens holding shaft (7, 8) and the grinding wheel (4, 5, 6),
- a position encoder for detecting the axial position (Zₙ) of the spectacle lens holding shaft (7, 8) with respect to the grinding wheel (4, 5, 6),
- an input device (11, 18, 19, 20, 26, 27) for inputting the coordinates (X₁, Y₁; X₂, Y₂) or of the holes (21", 22" into the computer (10) and wherein
- a positioning device (4, 5, 6; 7, 8; 18, 19; 27, 45) controlled by the computer (10) according to the input coordinates, for the marking and drilling device (18, 19, 20; 26, 27) with respect to the spectacle lens (25) is arranged on the spectacle lens rim grinding machine which is coupled in terms of movement in the X and Z direction to the grinding wheel (4, 5, 6), wherein the marking or drilling device (26) is positioned with respect to the spectacle lens (25) held by the spectacle lens holding shaft (7, 8) by the computer (10) as a function of the input coordinates (X₁, Y₁; X₂, Y₂) or (rₙ, θₙ) of the holes (21", 22") by rotating the spectacle lens holding shaft (7, 8) and adjusting the position of the grinding wheel (4, 5, 6).

4. Marking or drilling device according to claim 3, wherein the arm (27) is arranged so as to be telescopic in the X direction in a niche of the grinding chamber (2).

5. Marking or drilling device according to claims 3 or 4 with a scanning device (18, 19, 20; 26, 27) for the position of the holes (21, 22; 21", 22") in a spectacle lens (25) or a former (17) or a supporting disc arranged inside or outside the grinding chamber (2) which is coupled in terms of movement in the X and Z direction to the spectacle lens holding shaft (7, 8) or the grinding wheel (4, 5, 6).

6. Marking or drilling device according to claim 5, wherein a feeler arm (18; 27) projects radially into the region of the spectacle lens (25) held by the spectacle lens holding shaft (7, 8), the former (17) or the supporting disc and a feeler element (20) acting with or without contact is arranged on the feeler arm (18; 27).

7. Marking or drilling device according to claim 6, wherein the feeler element (20) is constructed as a feeler pin.

8. Marking or drilling device according to claim 6, wherein the feeler element (20) is constructed as an opto-electronic feeling device.

9. Marking or drilling device according to claim 8, wherein a linear opto-electronic feeler device is arranged on the feeler arm (18).

## Revendications

1. Procédé pour marquer ou de percer des trous dans des verres de lunettes dans lequel
- la position de perçages dans un verre de lunettes ou dans un gabarit ou dans un disque d'appui est palpée sans contact dans un dispositif de centrage pour des ébauches de verre de lunettes au moyen d'un système vidéo avec affichage sur un écran des contours du verre de lunettes ou du gabarit ou du disque d'appui et des perçages, et le relevé des données de la position des perçages s'effectue au moyen d'une exploitation automatique de l'image,
- les données relevées de la position des perçages sont envoyées à un calculateur en coordonnées cartésiennes ou polaires et
- sont utilisées pour commander le marquage ou le perçage au moyen d'un dispositif de marquage ou de perçage commandé par CNC.

2. Procédé pour marquer ou de percer des trous dans des verres de lunettes, dans lequel
- la position de perçages dans un verre de lunettes ou dans un gabarit ou dans un disque d'appui est palpée sans contact dans un dispositif de centrage pour des ébauches de verre de lunettes au moyen d'un système vidéo avec affichage sur un écran des contours du verre de lunettes ou du gabarit ou du disque d'appui et des perçages ou par pose su une tablette de numérisation et l'enregistrement des données de la position des perçages s'effectue par marquage au moyen d'un curseur et par cliquage du trou particulier,
- les données relevées de la position des perçages sont envoyées à un calculateur en coordonnées cartésiennes ou polaires et
- sont utilisées pour commander le marquage ou le perçage au moyen d'un dispositif de marquage ou de perçage commandé par CNC.

3. Machine à meuler les bords de verres de lunettes comprenant un dispositif de marquage ou de perçage pour marquer ou percer des trous dans des verres de lunettes, laquelle machine à meuler les bords de verres de lunettes comprenant
- un calculateur (10) pour commander le meulage en forme de verres de lunettes,
- un arbre de maintien de verre de lunettes (7, 8) pouvant être angulairement codé et fixé,
- un capteur angulaire (13) pour détecter l'angle de rotation (ϕₙ) de l'arbre de maintien de verre de lunettes (7, 8),
- au mois un disque de meulage (4, 5, 6) dans une chambre de meulage (2) réglable et positionnable radialement et axialement par rapport à l'arbre de maintien de verre de lunettes (7, 8),
- un capteur de déplacement pour détecter l'écart radial (Xₙ) entre l'arbre de maintien de verre de lunettes (7, 8) et le disque de meulage (4, 5, 6),
- un capteur de déplacement pour détecter la position (Zₙ) de l'arbre de maintien de verre de lunettes (7, 8) par rapport au disque de meulage (4, 5, 6) et
- un dispositif de saisie pour les coordonnées (X₁, Y₁; X₂, Y₂) ou (rₙ, θₙ) des trous (21", 22") dans le calculateur (10), et dans laquelle
- un dispositif de positionnement (4, 5, 6 ; 7, 8 ; 18, 19 ; 27 ; 45) commandé par le calculateur en fonction des coordonnées introduites pour le dispositif de marquage ou de perçage par rapport au verre de lunettes (25) est disposé, qui est solidaire en mouvement dans les directions X et Z avec le disque de meulage (4, 5, 6), le positionnement du dispositif de marquage ou de perçage (26) par rapport au verre de lunettes maintenu par l'arbre de maintien du verre de lunettes (7, 8) étant effectué par le calculateur (10) en fonction des coordonnées (X₁, Y₁; X₂, Y₂) ou (rₙ, θₙ) des trous (21", 22") introduites en tournant l'arbre de maintien du verre de lunettes (7, 8) et en positionnant le disque de meulage.

4. Dispositif de marquage ou de perçage selon la revendication 3, qui est disposé, télescopique dans la direction des X, dans une niche de la chambre de meulage (2) de la machine à meuler les bords de verres de lunettes.

5. Dispositif de marquage ou de perçage selon les revendications 3 ou 4 avec un dispositif de palpage (18, 19, 20 ; 26, 27) pour la position des perçages (21, 22 ; 21", 22") dans un verre de lunettes ou un gabarit ou un disque d'appui sur la machine à meuler les bords de verres de lunettes.

6. Dispositif de marquage ou de perçage selon la revendication 5, dans lequel un bras de palpage (18, 27) dépasse radialement dans la zone du verre de lunettes (25) maintenu par l'arbre de maintien du verre de lunettes (7, 8), du gabarit (17) ou du disque d'appui et, un élément de palpage (20) agissant avec ou sans contact (20) est disposé sur le bras de palpage (18 ; 27).

7. Dispositif de marquage ou de perçage selon la revendication 6 dans lequel, l'élément de palpage (20) est conformé en palpeur à tige.

8. Dispositif de marquage ou de perçage selon la revendication 6 dans lequel l'elément de palpage (20) est conformé en dispositif de palpage opto-électronique.

9. Dispositif de marquage ou de perçage selon la revendication 8 dans lequel un dispositif de palpage opto-électronique linéaire est disposé sur le bras de palpage (18).
